# FASCICULE DE BREVET EUROPEEN

(11) **EP 3 678 899 B1**
(45) Date de publication et mention de la délivrance du brevet: **07.10.2026**
(21) Numéro de dépôt: 18778545.6
(22) Date de dépôt: 06.09.2018
(51) Int. Cl.: B60Q 1/00, B60Q 1/26, F21S 41/141, F21S 41/36, F21S 43/14

(54) **DISPOSITIF OPTIQUE POUR VEHICULE AUTOMOBILE ASSURANT DEUX FONCTIONS D'ECLAIRAGE DISTINCTES**
OPTISCHE VORRICHTUNG FÜR EIN KRAFTFAHRZEUG MIT ZWEI GETRENNTEN BELEUCHTUNGSFUNKTIONEN
OPTICAL DEVICE FOR A MOTOR VEHICLE PROVIDING TWO SEPARATE LIGHTING FUNCTIONS

(30) Priorité: 07.09.2017 FR 1758265
(43) Date de publication de la demande: 15.07.2020
(73) Titulaire: Marelli Automotive Lighting France, 89330 Saint-Julien-du-Sault (FR)
(72) Inventeur: BERGERAT, Stéphanie, 78190 Trappes (FR); ARRIVET, Franck, 78190 Trappes (FR)
(74) Mandataire: Garavelli, Paolo
(86) Numéro de dépôt international: PCT/FR2018/052178
(87) Numéro de publication internationale: WO 2019/048786

(56) Documents cités:
- EP-A2- 1 126 209
- WO-A1-2010/120251
- DE-A1- 10 139 812
- DE-A1- 102010 055 332
- FR-A1- 2 829 225
- GB-A- 2 207 230
- GB-A- 2 222 241
- JP-A- 2002 075 022
- US-A- 2 117 099

## Description

### Domaine technique

La présente invention concerne le domaine technique de l'éclairage et de la signalisation des véhicules, notamment des véhicules automobiles. Elle concerne plus particulièrement un dispositif optique pour véhicule automobile, intégrant deux fonctions lumineuses distinctes pour un plus faible encombrement.

### État de la technique

Les normes réglementaires imposent à chaque véhicule automobile d'être équipé de dispositifs optiques afin d'assurer leur signalisation et d'avertir les autres usagers de la route des intentions de son conducteur. On peut citer notamment les feux clignotants de couleur ambre permettant d'indiquer un changement de direction du véhicule, les feux de position de couleur rouge et d'intensité modérée qui sont situés à l'arrière du véhicule pour signaler sa position, les feux-stops également de couleur rouge, mais d'intensité plus forte pour signaler un freinage, etc.

Généralement, ces différents feux ou dispositifs optiques sont présents dans un même boîtier optique. Ils sont agencés de sorte que leurs faisceaux lumineux éclairent des zones distinctes d'un même écran obturant le boîtier optique. De ce fait, le boîtier optique doit comporter un écran de dimensions suffisantes pour permettre à chaque feu d'éclairer une surface distincte de l'écran pour que chaque feu puisse remplir sa fonction. Les boîtiers optiques présentent donc un certain encombrement au niveau de leur écran, dont l'un des inconvénients est de rendre leur intégration plus difficile sur un véhicule automobile.

Selon un autre inconvénient, les différents feux sont visibles à travers l'écran protégeant l'intérieur du boîtier optique. Or, les feux sont généralement de formes diverses, complexes et de couleurs différentes. De ce fait, chaque boîtier optique modifie localement et de façon prononcée l'aspect esthétique du véhicule automobile.

Afin de répondre à ces problématiques, le document DE 10139812 A1 et le document GB 2 222 241 A proposent tous deux un boîtier optique, dans lequel la lumière émise par un premier feu passe à travers un écran réfléchissant la lumière émise par un deuxième feu. Ces solutions permettent de réduire l'encombrement latéral des feux dans le boîtier optique, tout en conservant des fonctions d'éclairage distinctes.

La présente invention vise à proposer un dispositif optique assurant deux fonctions d'éclairage distinctes tout en étant plus compact et plus discret d'aspect visuel.

### Description de l'invention

Pour cela, l'invention propose un dispositif optique pour véhicule automobile comportant un boîtier optique ouvert au niveau d'une face avant, le boîtier optique comprenant :
- une première source de lumière agencée pour éclairer une première surface présente dans le boîtier optique, la première surface étant configurée pour réfléchir un faisceau lumineux émis par la première source de lumière en direction de la face avant du boîtier optique ; et
- une deuxième source de lumière agencée pour éclairer une deuxième surface présente dans le boîtier optique, la deuxième surface étant de forme concave et configurée pour réfléchir un faisceau lumineux émis par la deuxième source de lumière en direction de la face avant du boîtier optique,
- la première surface est positionnée entre la face avant du boîtier optique et la deuxième surface, et la première surface comporte un passage par lequel passe au moins une partie du faisceau lumineux réfléchi par la deuxième surface.

L'invention est remarquable en ce que la première surface est de forme concave et configurée pour diffuser le faisceau lumineux émis par la première source de lumière et la première source de lumière est configurée pour éclairer le pourtour du passage au niveau de la première surface. Par le terme « diffuser », on entend ici la réflexion par la première surface réfléchissante d'un faisceau lumineux dans toutes les directions.

L'invention permet avantageusement de masquer en partie, de préférence totalement, le passage lorsque la première source de lumière est allumée. En effet, le faisceau lumineux émis par la première source de lumière est alors diffusé par la première surface réfléchissante, de sorte que son faisceau lumineux réfléchi recouvre le passage en partie, de préférence totalement. Ainsi, lorsque la première source de lumière est allumée, le contour du passage au niveau de la première surface réfléchissante est difficilement visible, voire indécelable, par un observateur regardant la face avant du boîtier optique. De préférence, le faisceau lumineux émis par la première source de lumière entoure le passage afin de favoriser une dissimulation complète du passage par la lumière réfléchie par la première surface réfléchissante.

L'invention propose ainsi un dispositif optique original comprenant un boîtier optique dans lequel est présent une première surface réfléchissante, positionnée devant une seconde surface réfléchissante. La première surface réfléchissante comporte une ouverture ou un passage permettant au faisceau lumineux réfléchi par la deuxième surface de passer à travers la première surface. Les faisceaux lumineux émis par la première et la deuxième source de lumière peuvent ainsi traverser, simultanément ou alternativement, une même ouverture ou surface délimitée par la face avant du boîtier optique. Autrement dit, l'invention permet à des faisceaux lumineux différents ou identiques en intensité et/ou en couleurs, de passer à travers une même fenêtre délimitée par la face avant du boîtier optique. La présente invention propose ainsi un dispositif optique apte à assurer deux fonctions d'éclairage distinctes par l'intermédiaire de faisceaux lumineux émis par la première et la deuxième source de lumière, tout en étant plus compact au niveau de sa face avant par rapport à l'état de la technique. Ainsi, un dispositif optique selon l'invention est plus aisément intégrable à la carrosserie d'un véhicule automobile.

Selon un autre mode de réalisation, la première surface réfléchissante est agencée de manière à dissimuler la totalité ou la quasi-totalité de la deuxième surface réfléchissante à un observateur, regardant à travers l'ouverture délimitée par la face avant du boîtier optique. Éventuellement, une partie de la deuxième surface peut être visible par l'observateur, à travers le passage ménagé dans la première surface. Toutefois, ce mode de réalisation offre l'avantage de rendre visible principalement la première surface afin d'offrir un aspect visuel plus homogène et donc plus discret de la face avant du boîtier optique. Ainsi, un dispositif optique selon l'invention est moins susceptible de modifier localement et de façon prononcée, l'aspect esthétique d'un véhicule automobile.

Selon un autre mode de réalisation, la première surface est configurée pour diffuser le faisceau lumineux émis par la première source de lumière. Par le terme « diffuser », on entend ici la réflexion par la première surface réfléchissante d'un faisceau lumineux dans toutes les directions. De préférence, la première source de lumière est configurée pour éclairer le pourtour du passage au niveau de la première surface. Ce mode de réalisation permet avantageusement de masquer en partie, de préférence totalement, le passage lorsque la première source de lumière est allumée. En effet, le faisceau lumineux émis par la première source de lumière est alors diffusé par la première surface réfléchissante, de sorte que son faisceau lumineux réfléchi recouvre le passage en partie, de préférence totalement. Ainsi, lorsque la première source de lumière est allumée, le contour du passage au niveau de la première surface réfléchissante est difficilement visible, voire indécelable, par un observateur regardant la face avant du boîtier optique. De préférence, le faisceau lumineux émis par la première source de lumière entoure le passage afin de favoriser une dissimulation complète du passage par la lumière réfléchie par la première surface réfléchissante.

Selon un autre mode de réalisation, le boîtier optique est fermé ou bien obturé au niveau de sa face avant par un écran translucide, diffusant la lumière provenant de l'extérieur du boîtier optique. Par le terme « translucide », on entend ici le fait que l'écran est configuré pour transmettre la lumière de manière diffuse, de sorte que les objets apparaissent flous à travers l'écran. Ce mode de réalisation permet à la lumière provenant de l'extérieur du boîtier d'être diffusée à de multiples reprises lors de ses passages à travers l'écran translucide et sa réflexion sur la première surface réfléchissante, de sorte qu'au niveau de la première surface le contour du passage devient difficilement visible, voire indécelable, par un observateur situé devant le boîtier optique lorsque les sources de lumière sont éteintes. Ce mode de réalisation offre l'avantage d'uniformiser l'apparence de la première surface réfléchissante à travers l'écran, afin d'offrir un aspect visuel plus homogène et donc plus discret de la face avant du boîtier optique.

Selon un autre mode de réalisation, la deuxième surface est agencée de sorte à faire passer, à travers le passage de la première surface, plus de 60% et de préférence plus de 70% de l'intensité du faisceau lumineux émis par la deuxième source de lumière.

Selon un autre mode de réalisation, la première surface et/ou l'écran est grainé, sablé ou rainuré/strié.

Comme mentionné ci-dessus, la première surface est de forme concave. Ce mode de réalisation vise à permettre une plus grande convergence, par la première surface, du faisceau lumineux émis par la première source de lumière.

Selon un autre mode de réalisation, la première source de lumière et la deuxième source de lumière sont situées au niveau d'un même côté du boîtier optique. Ce mode de réalisation vise à simplifier l'agencement entre la première et la deuxième surface de réflexion. De préférence, la première source de lumière est dissimulée à un observateur par un rebord de la face avant du boîtier optique et/ou la deuxième source de lumière est dissimulée à un observateur par la première surface réfléchissante.

Selon un autre mode de réalisation, la deuxième surface réfléchissante est configurée pour réfléchir la lumière émise par la deuxième source de lumière, selon un faisceau lumineux sensiblement rectiligne. Ce mode de réalisation est particulièrement avantageux pour inclure la zone éclairée par la deuxième source de lumière, dans la zone éclairée par la première source de lumière. Le dispositif optique permet ainsi d'obtenir des effets visuels variés selon que la première et la deuxième source de lumière fonctionnement de façon simultanée ou alternativement.

Selon un autre mode de réalisation, la première source de lumière et la deuxième source de lumière émettent des faisceaux lumineux de couleurs identiques ou similaires, simultanément ou alternativement.

Selon un autre mode de réalisation, la deuxième source de lumière émet un faisceau lumineux plus intense que la première source de lumière. Ce mode de réalisation est notamment avantageux pour indiquer à un observateur la position du dispositif optique par l'intermédiaire de la première source de lumière et/ou l'avertir de l'intention de l'utilisateur du dispositif optique par l'intermédiaire de la deuxième source de lumière. À titre d'exemple, la première source de lumière et la deuxième source de lumière émettent un faisceau lumineux de couleur rouge ou sensiblement rouge.

Selon un autre mode de réalisation, la première source de lumière et la deuxième source de lumière émettent des faisceaux lumineux de couleurs différentes, simultanément ou alternativement.

Selon un autre mode de réalisation, la première source de lumière comporte au moins deux sources de lumière auxiliaires émettant chacune un faisceau de lumière de couleurs différentes. Selon une variante de réalisation, au moins une source de lumière auxiliaire émet un faisceau lumineux de couleur blanche et au moins une autre source de lumière auxiliaire émet un faisceau lumineux de couleur orange ou ambre.

Bien entendu, les différentes caractéristiques, variantes et formes de réalisation mentionnées ci-dessus peuvent être associées les unes avec les autres selon diverses combinaisons, dans la mesure où elles ne sont pas incompatibles ou exclusives les unes des autres.

L'invention concerne également un véhicule automobile comprenant un dispositif optique tel que décrit ci-dessus.

### Description des figures

L'invention sera mieux comprise, grâce à la description ci-après, qui se rapporte à des modes de réalisations préférés, donnés à titre d'exemples non limitatifs, et expliqués avec référence aux dessins schématiques annexés, dans lesquels :
- la figure 1 représente une coupe longitudinale d'un premier mode de réalisation d'un dispositif optique selon l'invention comprenant une première source de lumière et une deuxième source de lumière toutes deux activent ;
- la figure 2 représente une coupe longitudinale d'un deuxième mode de réalisation d'un dispositif optique selon l'invention dans lequel la première source de lumière est uniquement activée ;
- la figure 3 représente une coupe longitudinale d'un troisième mode de réalisation d'un dispositif optique selon l'invention dans lequel aucune source de lumière est activée.

### Description de modes de réalisation détaillés de l'invention

Pour rappel, l'invention vise à proposer un dispositif optique assurant deux fonctions d'éclairage distinctes, tout en étant plus compact et plus discret d'aspect visuel.

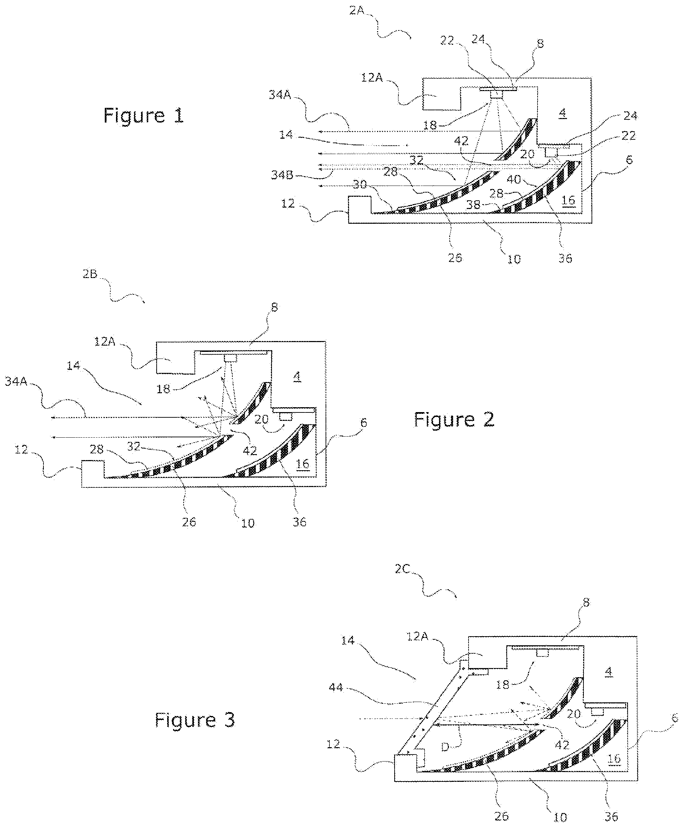

La figure 1 illustre un premier mode de réalisation d'un dispositif optique 2A selon l'invention. Le dispositif optique 2A comprend un boîtier optique 4 délimité par un fond 6, une paroi supérieure 8, une paroi inférieure 10 et deux parois latérales non visibles sur les figures. Le boîtier optique comporte également une face avant 12 opposée au fond 6, délimitant une ouverture 14 afin de permettre à un observateur de visualiser l'intérieur dudit boîtier. Le boîtier optique délimite donc un logement 16 dans lequel sont présentes une première source de lumière 18 et une deuxième source de lumière 20, toutes deux dirigées vers la paroi inférieure 10 du boîtier optique. Chaque source de lumière est alimentée par un dispositif de contrôle non représenté sur les figures, permettant d'activer simultanément ou alternativement une ou plusieurs diodes électroluminescentes 22 placées sur des plaques 24 et formant lesdites sources de lumière. Il est à noter que chaque source de lumière peut comprendre une ou plusieurs sources de lumière auxiliaires sous la forme de diodes électroluminescentes, non représentées sur les figures, afin de faciliter la compréhension des figures.

Plus précisément, la première source de lumière 18 est agencée à proximité de la paroi supérieure 8 du boîtier optique de manière à être dissimulée derrière une partie 12A de la face avant du boîtier. Un premier support 26 de forme concave est positionné en vis-à-vis de la première source de lumière 18 et recouvert d'une couche métallisée 28 au niveau d'une face interne 30, de sorte que la couche métallisée 28 forme une première surface 32 réfléchissant au moins une partie d'un faisceau lumineux 34A, émis par la première source de lumière 18, en direction de l'ouverture 14. Autrement dit, la première surface 32 est configurée pour faire passer à travers l'ouverture 14 au moins une partie de la lumière émise par la première source de lumière 18.

La deuxième source de lumière 20 est agencée entre le premier support 26 et le fond 6 du boîtier optique 4. Ainsi, de façon avantageuse, la deuxième source de lumière 20 est dissimulée par le premier support 26 à un observateur du dispositif optique. Le boîtier optique 4 comprend également un deuxième support 36 de forme concave, positionné en vis-à-vis de la deuxième source de lumière 20, et recouvert d'une couche métallisée 28 au niveau d'une face interne 38, de sorte que la couche métallisée 28 forme une deuxième surface 40 réfléchissant au moins une partie d'un faisceau lumineux 34B émis par la deuxième source de lumière 20, en direction du premier support 26.

Le premier support 26 ainsi que sa couche métallisée 28 sont traversés par un passage 42 permettant à au moins une partie du faisceau lumineux 34B réfléchi par la deuxième surface 40, d'éclairer au moins une partie de l'ouverture 14 du boîtier optique 4. Ainsi, de façon avantageuse, à travers l'ouverture 14 peuvent être émis deux faisceaux lumineux distincts en même temps ou alternativement. De ce fait, l'ouverture 14 du boîtier optique 4 peut être de plus petites dimensions par rapport aux boîtiers optiques de l'état de la technique, tout en permettant le passage à travers une même ouverture de deux faisceaux lumineux distincts assurant deux fonctions d'éclairage distinctes.

À titre d'exemple, la première source de lumière 18 est configurée pour émettre un faisceau lumineux de couleur rouge afin de signaler la position du dispositif optique à un observateur, et la deuxième source de lumière 20 est configurée pour émettre un faisceau lumineux d'une même couleur, mais plus intense, afin d'avertir une intention de freiner de la part d'un utilisateur du dispositif optique 2A.

Selon une variante de réalisation, la première source de lumière 18 est configurée pour émettre un faisceau lumineux de couleur rouge pour signaler la position du dispositif optique à un observateur, et la deuxième source de lumière 20 est configurée pour émettre un faisceau lumineux de couleur orange ou ambre afin d'indiquer une intention de changer de direction de la part d'un utilisateur du dispositif optique 2A.

Selon une autre variante de réalisation, la première source de lumière 18 est configurée pour émettre un faisceau lumineux de couleur rouge pour signaler la position du dispositif optique à un observateur, et la deuxième source de lumière 20 est configurée pour émettre un faisceau lumineux de couleur blanche afin d'indiquer une intention de reculer de la part d'un utilisateur du dispositif optique 2A.

Il est à noter que les exemples de réalisation décrits ci-dessus peuvent être reproduits en inversant la première et la deuxième source de lumière.

De préférence, les couches métallisées 28 sont de même nature de sorte qu'elles ont sensiblement le même aspect visuel. Ainsi, lorsque les sources de lumière sont éteintes, le passage 42 est peu ou pas visible par un observateur du dispositif optique 2A car le passage débouche sur la deuxième surface 40 dont l'aspect est très similaire ou identique à l'aspect de la première surface 32. De façon avantageuse, la première surface 32 est donc d'aspect sensiblement homogène pour un observateur du dispositif optique lorsque les sources de lumière sont inactives ou éteintes. De ce fait, le dispositif optique 2A selon l'invention est également d'aspect plus discret de jour, par rapport aux dispositifs optiques de l'état de la technique.

La figure 2 illustre à présent un deuxième mode de réalisation de l'invention d'un dispositif optique 2B, se distinguant du mode de réalisation précédent en ce que la première surface 32 est diffusante et en ce que la première source de lumière 18 est configurée pour éclairer notamment le pourtour du passage 42. La surface diffusante est configurée pour favoriser une diffusion du faisceau lumineux 34A émis par la première source de lumière 18 au niveau de la première surface 32. Pour cela, la première surface 32 peut avoir une surface de texture inhomogène, grainée, sablée et/ou rainurée. Ainsi, de façon avantageuse, le faisceau lumineux 34A émit par la première source de lumière 18 diffuse tout autour du passage 42 de sorte que le faisceau lumineux réfléchi recouvre le passage en partie, de préférence totalement. Ainsi, lorsque la première source de lumière 18 est allumée, le passage 42 traversant la première surface 32 diffusante est difficilement visible, voire indécelable, par un observateur regardant la face avant du boîtier optique.

La figure 3 illustre un troisième mode de réalisation de l'invention d'un dispositif optique 2C, se distinguant du mode de réalisation précédent en ce que l'ouverture 14 est obturée par un écran translucide 44. Ce mode de réalisation permet à la lumière provenant de l'extérieur du boîtier optique 4 d'être diffusée à de multiples reprises lors de ses passages à travers l'écran translucide 44 et sa réflexion sur la première surface 32, de sorte que le passage soit difficilement visible, voire indécelable, par un observateur situé devant le boîtier optique lorsque les sources de lumière sont éteintes. Ce mode de réalisation offre l'avantage d'uniformiser l'apparence de la première surface réfléchissante à travers l'écran, afin d'offrir un aspect visuel plus homogène et donc plus discret de la face avant du boîtier optique 4.

De préférence, les dimensions du passage 42 sont choisies de sorte que l'intensité du faisceau lumineux 34B réfléchi par la deuxième surface soit suffisante et que le passage soit difficilement visible à travers l'écran translucide 44. Par intensité suffisante du faisceau lumineux 34B, on entend un signal lumineux conforme aux normes d'éclairage pour les véhicules automobiles.

Selon un mode de réalisation alternatif, la couche métallisée 28 formant la première surface 32 peut être de couleur blanche de manière à diffuser les rayons issus de la première source de lumière 18 ainsi que la lumière provenant de l'extérieur du boîtier optique 4. Ce mode de réalisation est particulièrement avantageux pour optimiser l'homogénéité de la première surface 32 lorsque la première source de lumière 18 est allumée et mieux dissimuler la présence du passage 42.

Selon un autre mode de réalisation alternatif, le rapport entre la plus petite dimension du trou au niveau de la première surface 32 et la distance D séparant l'écran translucide 44 est égal à 5, de préférence supérieur à 5. La valeur de ce rapport vise à permettre une diffusion suffisante de la lumière entre l'écran translucide 44 et la première surface 32 afin de mieux dissimuler la présence du passage 42. Bien entendu, la valeur de ce rapport est susceptible d'évoluer en fonction des propriétés de transmission de l'écran translucide 44 et/ou des propriétés de réflexion de la première surface 32.

## Revendications

1. Dispositif optique (2A, 2B, 2C) pour véhicule automobile comportant un boîtier optique (4) ouvert au niveau d'une face avant (12), le boîtier optique (4) comprenant :
- une première source de lumière (18) agencée pour éclairer une première surface (32) présente dans le boîtier optique (4), la première surface (32) étant configurée pour réfléchir un faisceau lumineux (34A) émis par la première source de lumière (18) en direction de la face avant (12) du boîtier optique (4) ; et
- une deuxième source de lumière (20) agencée pour éclairer une deuxième surface (40) présente dans le boîtier optique (4), la deuxième surface (40) étant de forme concave et configurée pour réfléchir un faisceau lumineux (34B) émis par la deuxième source de lumière (20) en direction de la face avant (12) du boîtier optique (4) ;
- la première surface (32) est positionnée entre la face avant (12) du boîtier optique (4) et la deuxième surface (40) et la première surface comporte un passage (42) par lequel passe au moins une partie du faisceau lumineux (34B) réfléchi par la deuxième surface (40),
- la première surface (32) est de forme concave, et la première source de lumière (18) est configurée pour éclairer le pourtour du passage (42) au niveau de la première surface (32),
**caractérisé en ce que** la première surface (32) est configurée pour diffuser le faisceau lumineux (34A) émis par la première source de lumière (18).

2. Dispositif optique (2A, 2B, 2C) selon la revendication précédente, **caractérisé en ce que** la première surface (32) est agencée de manière à dissimuler la totalité ou la quasi-totalité de la deuxième surface (40) à un observateur, regardant à travers l'ouverture située au niveau de la face avant (12) du boîtier optique (4).

3. Dispositif optique (2C) selon l'une des revendications précédentes, **caractérisé en ce que** le boîtier optique (4) est fermé au niveau de sa face avant (12) par un écran translucide (44), diffusant la lumière provenant de l'extérieur du boîtier optique.

4. Dispositif optique (2A, 2B, 2C) selon l'une des revendications précédentes, **caractérisé en ce que** la deuxième surface (40) est agencée de sorte à faire passer, à travers le passage (42) de la première surface (32), plus de 60% et de préférence plus de 70% de l'intensité du faisceau lumineux (34B) émis par la deuxième source de lumière (20).

5. Dispositif optique (2A, 2B, 2C) selon l'une des revendications précédentes, **caractérisé en ce que** la première source de lumière (18) et la deuxième source de lumière (20) sont situées au niveau d'un même côté (8) du boîtier optique (4).

6. Dispositif optique (2A, 2B, 2C) selon l'une des revendications précédentes, **caractérisé en ce que** la deuxième surface (40) réfléchissante est configurée pour réfléchir la lumière émise par la deuxième source de lumière (20), selon un faisceau lumineux (34B) sensiblement rectiligne.

7. Dispositif optique (2A, 2B, 2C) selon l'une des revendications précédentes, **caractérisé en ce que** la première source de lumière (18) et la deuxième source de lumière (20) émettent des faisceaux lumineux de couleurs identiques ou similaires, alternativement ou simultanément.

8. Dispositif optique (2A, 2B, 2C) selon la revendication précédente, **caractérisé en ce que** la deuxième source de lumière (20) émet un faisceau lumineux plus intense que la première source de lumière (18).

9. Dispositif optique (2A, 2B, 2C) selon la revendication précédente, **caractérisé en ce que** la première source de lumière (18) et la deuxième source de lumière (20) émettent des faisceaux lumineux de couleurs différentes, alternativement ou simultanément.

10. Dispositif optique (2A, 2B, 2C) selon l'une des revendications précédentes, **caractérisé en ce que** la première source de lumière (18) comporte au moins deux sources de lumière auxiliaires émettant chacune un faisceau de lumière de couleurs différentes.

11. Dispositif optique (2A, 2B, 2C) selon la revendication précédente, **caractérisé en ce qu'**au moins une source de lumière auxiliaire émet un faisceau lumineux de couleur blanche et au moins une autre source de lumière auxiliaire émet un faisceau lumineux de couleur orange ou ambre.

12. Véhicule automobile comprenant un dispositif optique (2A, 2B, 2C) selon l'une des revendications précédentes.

## Patentansprüche

1. Optische Vorrichtung (2A, 2B, 2C) für ein Kraftfahrzeug, aufweisend ein an einer Vorderseite (12) offenes optisches Gehäuse (4), wobei das optische Gehäuse (4) umfasst:
- eine erste Lichtquelle (18), die so angeordnet ist, dass sie eine erste Oberfläche (32) beleuchtet, die in dem optischen Gehäuse (4) vorhanden ist, wobei die erste Oberfläche (32) so konfiguriert ist, dass sie einen von der ersten Lichtquelle (18) in Richtung der Vorderseite (12) des optischen Gehäuses (4) ausgesendeten Lichtstrahl (34A) reflektiert; und
- eine zweite Lichtquelle (20), die so angeordnet ist, dass sie eine zweite Oberfläche (40) beleuchtet, die in dem optischen Gehäuse (4) vorhanden ist, wobei die zweite Oberfläche (40) konkav und so konfiguriert ist, dass sie einen von der zweiten Lichtquelle (20) in Richtung der Vorderseite (12) des optischen Gehäuses (4) ausgesendeten Lichtstrahl (34B) reflektiert;
- wobei die erste Oberfläche (32) zwischen der Vorderseite (12) des optischen Gehäuses (4) und der zweiten Oberfläche (40) positioniert ist und die erste Oberfläche einen Durchgang (42) aufweist, durch den mindestens ein Teil des von der zweiten Oberfläche (40) reflektierten Lichtstrahls (34B) hindurchtritt,
- wobei die erste Oberfläche (32) konkav ist und die erste Lichtquelle (18) so konfiguriert ist, dass sie den Randbereich des Durchgangs (42) an der ersten fläche (32) so konfiguriert ist, dOberfläche (32) beleuchtet, **dadurch gekennzeichnet, dass** die erste Oberass sie den von der ersten Lichtquelle (18) ausgesendeten Lichtstrahl (34A) streut.

2. Optische Vorrichtung (2A, 2B, 2C) nach vorhergehendem Anspruch, **dadurch gekennzeichnet, dass** die erste Oberfläche (32) so angeordnet ist, dass sie die zweite Oberfläche (40) vollständig oder fast vollständig vor einem Betrachter verbirgt, der durch die Öffnung an der Vorderseite (12) des optischen Gehäuses (4) blickt.

3. Optische Vorrichtung (2C) nach einem der vorhergehenden Ansprüche, **dadurch gekennzeichnet, dass** das optische Gehäuse (4) an seiner Vorderseite (12) durch einen lichtdurchlässigen Schirm (44) verschlossen ist, der das von außerhalb des optischen Gehäuses einfallende Licht streut.

4. Optische Vorrichtung (2A, 2B, 2C) nach einem der vorhergehenden Ansprüche, **dadurch gekennzeichnet, dass** die zweite Oberfläche (40) so angeordnet ist, dass mehr als 60 % und vorzugsweise mehr als 70 % der Intensität des von der zweiten Lichtquelle (20) ausgesendeten Lichtstrahls (34B) durch den Durchgang (42) der ersten Oberfläche (32) hindurchtreten können.

5. Optische Vorrichtung (2A, 2B, 2C) nach einem der vorhergehenden Ansprüche, **dadurch gekennzeichnet, dass** sich die erste Lichtquelle (18) und die zweite Lichtquelle (20) auf derselben Seite (8) des optischen Gehäuses (4) befinden.

6. Optische Vorrichtung (2A, 2B, 2C) nach einem der vorhergehenden Ansprüche, **dadurch gekennzeichnet, dass** die zweite reflektierende Oberfläche (40) so konfiguriert ist, dass sie das von der zweiten Lichtquelle (20) ausgesendete Licht gemäß einem im Wesentlichen geradlinigen Lichtstrahl (34B) reflektiert.

7. Optische Vorrichtung (2A, 2B, 2C) nach einem der vorhergehenden Ansprüche, **dadurch gekennzeichnet, dass** die erste Lichtquelle (18) und die zweite Lichtquelle (20) abwechselnd oder gleichzeitig Lichtstrahlen gleicher oder ähnlicher Farben aussenden.

8. Optische Vorrichtung (2A, 2B, 2C) nach vorhergehendem Anspruch, **dadurch gekennzeichnet, dass** die zweite Lichtquelle (20) einen intensiveren Lichtstrahl als die erste Lichtquelle (18) aussendet.

9. Optische Vorrichtung (2A, 2B, 2C) nach vorhergehendem Anspruch, **dadurch gekennzeichnet, dass** die erste Lichtquelle (18) und die zweite Lichtquelle (20) abwechselnd oder gleichzeitig Lichtstrahlen unterschiedlicher Farben aussenden.

10. Optische Vorrichtung (2A, 2B, 2C) nach einem der vorhergehenden Ansprüche, **dadurch gekennzeichnet, dass** die erste Lichtquelle (18) mindestens zwei Hilfslichtquellen aufweist, die jeweils einen Lichtstrahl unterschiedlicher Farben aussenden.

11. Optische Vorrichtung (2A, 2B, 2C) nach vorhergehendem Anspruch, **dadurch gekennzeichnet, dass** mindestens eine Hilfslichtquelle einen weißen Lichtstrahl aussendet und mindestens eine weitere Hilfslichtquelle einen orangefarbenen oder bernsteinfarbenen Lichtstrahl aussendet.

12. Kraftfahrzeug, das eine optische Vorrichtung (2A, 2B, 2C) nach einem der vorhergehenden Ansprüche umfasst.

## Claims

1. An optical device (2A, 2B, 2C) for a motor vehicle comprising an optical housing (4) open at a front face (12), the optical housing (4) comprising:
- a first light source (18) arranged to illuminate a first surface (32) present in the optical housing (4), the first surface (32) being configured to reflect a light beam (34A) emitted by the first light source (18) in the direction of the front face (12) of the optical housing (4); and
- a second light source (20) arranged to illuminate a second surface (40) present in the optical housing (4), the second surface (40) being concave in shape and configured to reflect a light beam (34B) emitted by the second light source (20) in the direction of the front face (12) of the optical housing (4);
- the first surface (32) is positioned between the front face (12) of the optical housing (4) and the second surface (40) and the first surface has a passage (42) through which at least part of the light beam (34B) reflected by the second surface (40) passes,
- the first surface (32) is concave in shape, and the first light source (18) is configured to illuminate the perimeter of the passage (42) at the first surface (32), **characterized in that** the first surface (32) is configured to scatter the light beam (34A) emitted by the first light source (18).

2. The optical device (2A, 2B, 2C) according to the preceding claim, **characterized in that** the first surface (32) is arranged so as to conceal all or almost all of the second surface (40) from an observer looking through the opening located at the front face (12) of the optical housing (4).

3. The optical device (2C) according to either one of the preceding claims, **characterized in that** the optical housing (4) is closed at its front face (12) by a translucent screen (44), scattering the light coming from outside the optical housing.

4. The optical device (2A, 2B, 2C) according to any one of the preceding claims, **characterized in that** the second surface (40) is arranged so as to allow more than 60% and preferably more than 70% of the intensity of the light beam (34B) emitted by the second light source (20) to pass through the passage (42) of the first surface (32).

5. The optical device (2A, 2B, 2C) according to any one of the preceding claims, **characterized in that** the first light source (18) and the second light source (20) are located on the same side (8) of the optical housing (4).

6. The optical device (2A, 2B, 2C) according to any one of the preceding claims, **characterized in that** the second reflective surface (40) is configured to reflect the light emitted by the second light source (20), along a substantially rectilinear light beam (34B).

7. The optical device (2A, 2B, 2C) according to any one of the preceding claims, **characterized in that** the first light source (18) and the second light source (20) emit, alternately or simultaneously, light beams of identical or similar colors.

8. The optical device (2A, 2B, 2C) according to the preceding claim, **characterized in that** the second light source (20) emits a more intense light beam than the first light source (18).

9. The optical device (2A, 2B, 2C) according to the preceding claim, **characterized in that** the first light source (18) and the second light source (20) emit, alternately or simultaneously, light beams of different colors.

10. The optical device (2A, 2B, 2C) according to any one of the preceding claims, **characterized in that** the first light source (18) comprises at least two auxiliary light sources, each emitting a light beam of a different color.

11. The optical device (2A, 2B, 2C) according to the preceding claim, **characterized in that** at least one auxiliary light source emits a white light beam and at least one other auxiliary light source emits an orange or amber light beam.

12. A motor vehicle comprising an optical device (2A, 2B, 2C) according to any one of the preceding claims.
